# FASCICULE DE BREVET EUROPEEN

(11) **EP 1 024 635 B1**
(45) Date de publication et mention de la délivrance du brevet: **02.05.2003**
(21) Numéro de dépôt: 00410006.1
(22) Date de dépôt: 25.01.2000
(51) Int. Cl.: H04L 27/26

(54) **Génération d'intervalle de garde dans une transmission en modulation DMT**
Schutzintervallerzeugung in einer Übertragung mit DMT-Modulation
Guard interval generation in a transmission with DMT modulation

(30) Priorité: 27.01.1999 FR 9901062
(43) Date de publication de la demande: 02.08.2000
(73) Titulaire: STMicroelectronics S.A., 92120 Montrouge (FR)
(72) Inventeur: Mazzoni, Simone, 38000 Grenoble (FR); Cambonie, Joel, 38190 La Combe de Lancey (FR)
(74) Mandataire: de Beaumont, Michel

(56) Documents cités:
- EP-A- 0 682 426
- EP-A- 0 719 004
- EP-A- 0 820 171
- DE-C- 4 425 713

## Description

La présente invention concerne la modulation sur tonalités multiples discrètes (DMT), et plus particulièrement la génération de préfixes cycliques dans une transmission en modulation DMT. La modulation DMT est par exemple utilisée par les normes ADSL et ADSL-lite.

Dans une modulation DMT, des données codées sous forme de coefficients complexes dans le domaine fréquentiel sont, du coté émetteur, traduites en échantillons dans le domaine temporel par transformée inverse rapide de Fourier (IFFT).

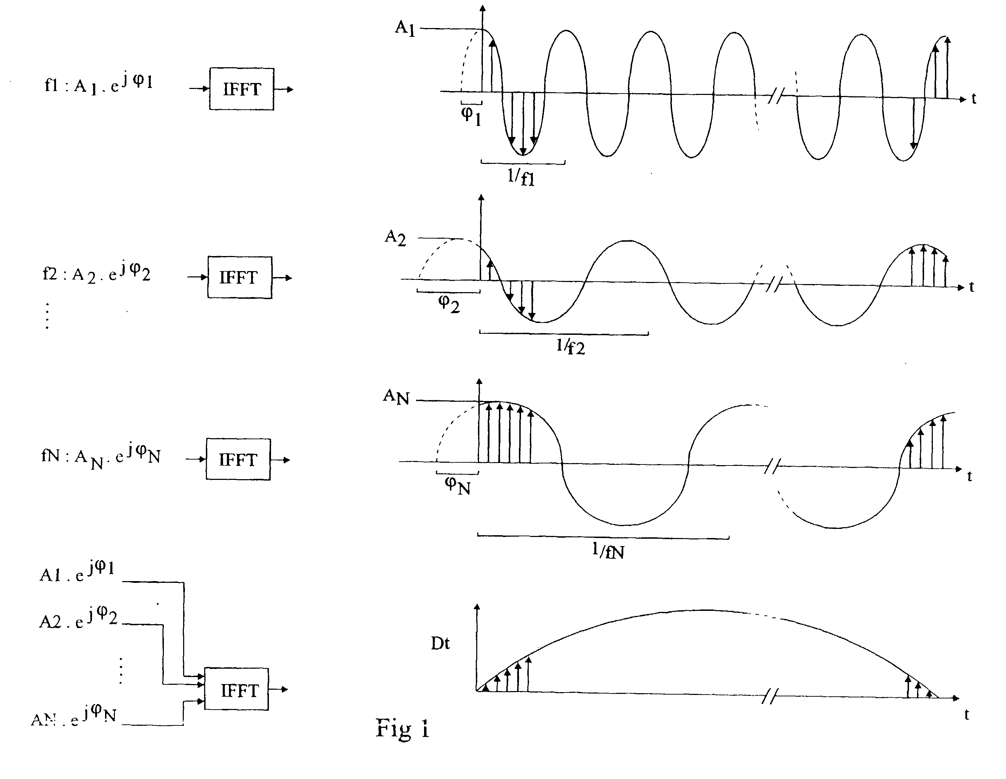

La figure 1 illustre la transformée IFFT d'un groupe de N coefficients complexes A₁.e^{jϕ}_{¹} à A_{N}.e^{jϕ}_{^{N}}. Chaque coefficient Aᵢ.e^{jϕ}_{ⁱ}, où i est compris entre 1 et N, est associé à une fréquence ou tonalité respective fᵢ. La transformée d'un coefficient Aᵢ.e^{jϕ}_{ⁱ} est une séquence d'échantillons numériques dans le domaine temporel formant un tronçon de porteuse sinusoïdale de fréquence fᵢ, d'amplitude Aᵢ, et de phase ϕᵢ. Une première courbe représente un tronçon de sinusoïde d'amplitude A₁, de période 1/f₁ et de phase ϕ₁, obtenu par transformée IFFT d'un coefficient A₁.e^{jϕ}_{¹} associé à une fréquence f₁. Une deuxième et une troisième courbes représentent des tronçons de sinusoïdes obtenus par transformée IFFT de coefficients A₂.e^{jϕ₂} et A_{N}.e^{jϕ_{N}} respectivement associés à des fréquences f₂ et f_{N}.

Une transformée IFFT du groupe de coefficients Aᵢ.e^{jϕ}i est constituée par la somme des tronçons de porteuses sinusoïdales obtenus par transformée IFFT de chacun des coefficients Aᵢ.e^{jϕ}i pour i compris entre 1 et N, cette somme étant appelée un "symbole". La transformée IFFT de N coefficients fournit un symbole Dₜ composé d'une succession de N échantillons numériques complexes S₁ à S_{N}. On notera que la forme du symbole Dₜ représenté n'est pas réaliste, mais a pour but de simplifier la compréhension de la présente description.

Les échantillons de domaine temporel obtenus par IFFT sont convertis en analogique pour être transmis, par exemple par une ligne téléphonique. Du coté récepteur, le signal analogique de la ligne est converti en numérique, et les échantillons qui en résultent sont convertis en coefficients complexes dans le domaine fréquentiel par transformée de Fourier rapide (FFT).

Pour supprimer un certain nombre de problèmes liés aux interférences intersymbole apparaissant lors de la transmission des symboles, on intercale entre chaque symbole un "préfixe cyclique" (ou intervalle de garde). Le préfixe cyclique est la reproduction en tête d'un symbole des derniers échantillons de ce symbole.

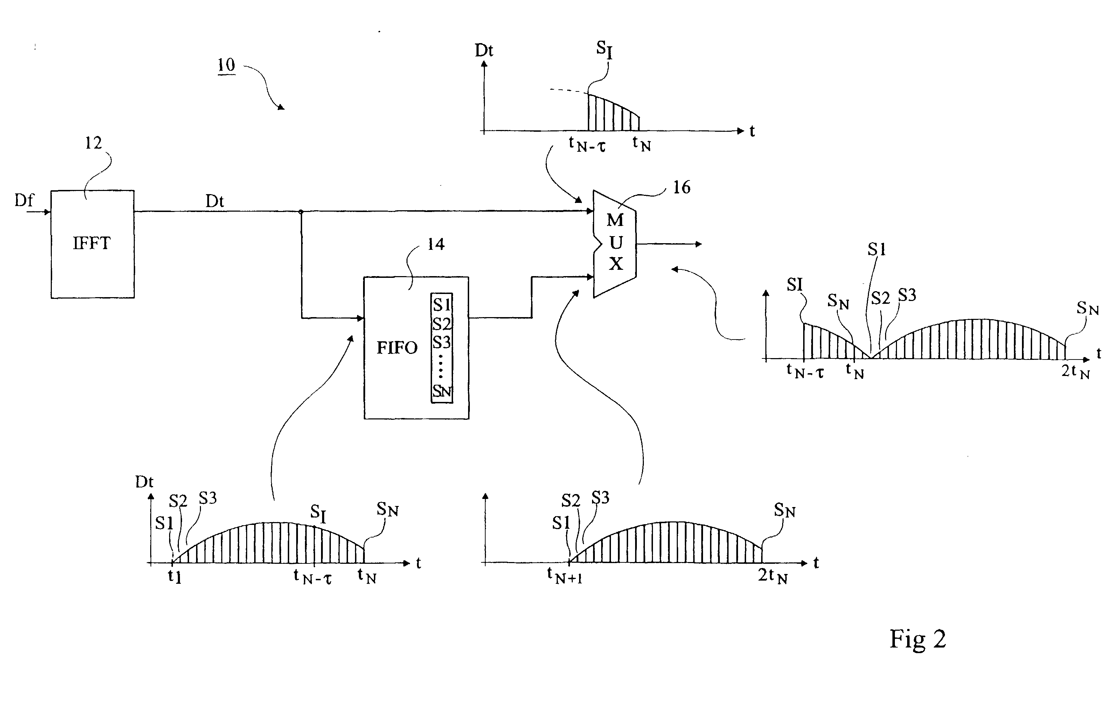

La figure 2 représente un circuit classique 10 d'introduction d'un préfixe cyclique de τ échantillons. Les coefficients complexes Aᵢ.e^{jϕ}_{ⁱ} pour i∈[1, N] sont fournis à un circuit 12 de transformée inverse de Fourier (IFFT). Le circuit IFFT 12 produit à partir du groupe de coefficients complexes un symbole Dₜ composé de N échantillons S₁ à S_{N} dans le domaine temporel. Le symbole Dₜ est fourni à une mémoire de type "premier-entré-premier-sorti" (FIFO) 14 et à une première entrée d'un multiplexeur 16. La sortie de la mémoire 14 est reliée à une deuxième entrée du multiplexeur 16.

A un instant t₁, le circuit IFFT 12 fournit un premier échantillon S₁ du symbole Dₜ, et la mémoire 14 est commandée en écriture pour stocker cet échantillon et les suivants. Le multiplexeur 16 est commuté pour sélectionner la sortie de la mémoire 14 qui fournit un échantillon d'un symbole précédent. Cette configuration du circuit 10 reste inchangée jusqu'à un instant t_{N-τ}.

A l'instant t_{N-τ}, la mémoire 14 a terminé de fournir les échantillons du symbole précédent et elle contient les échantillons du symbole courant Dₜ, jusqu'au dernier échantillon précédant le préfixe cyclique. Le circuit IFFT 12 commence à fournir les échantillons du préfixe, lesquels échantillons, désignés S_{I} à S_{N}, continuent à être stockés dans la mémoire 14. En même temps, le multiplexeur 16 est commuté de sorte qu'il transmet ces échantillons S_{I} à S_{N} du préfixe. Cette configuration du circuit 10 reste inchangée jusqu'à un instant t_{N}.

A l'instant t_{N+1}, le circuit IFFT 12 est arrêté, la mémoire 14 contient la totalité du symbole courant Dₜ et le préfixe vient d'être transmis. Le multiplexeur 16 est de nouveau commuté pour transmettre les échantillons S₁ à S_{N} fournis par la mémoire 14, c'est à dire le symbole Dₜ.

A un instant t_{N+τ+1} le circuit IFFT 12 est réactivé et il commence à fournir les échantillons du symbole suivant. L'instant t_{N+τ+1} correspond pour le symbole suivant à l'instant t₁ décrit précédemment.

Cette configuration du circuit 10 reste inchangée jusqu'à un instant 2t_{N} où on aura transmis le symbole Dₜ à la suite de son préfixe cyclique.

L'instant 2t_{N+1} correspond pour le symbole suivant à l'instant t_{N-τ} décrit précédemment.

Un inconvénient majeur du circuit 10 est que l'introduction du préfixe cyclique entraîne un retard t_{N} (de N échantillons) dans la transmission du symbole Dₜ. Dans certaines applications, telles que les communications téléphoniques ou d'autres communications en temps réel, l'introduction d'un tel retard n'est pas acceptable.

D'autre part, dans le circuit 10 selon l'art antérieur, le nombre N d'échantillons pouvant être élevé, la taille de la mémoire 14 peut être importante.

Un document EP-A-0 719 004 décrit un procédé de génération d'un préfixe cyclique d'un symbole dans le domaine temporel, ledit préfixe étant la reproduction des derniers échantillons du symbole en tête du symbole, le symbole étant obtenu par transformée de Fourier inverse de coefficients complexes correspondant à des fréquences respectives, qui comprend l'étape consistant à déphaser chaque coefficient complexe d'une valeur aléatoire connue.

Un objet de la présente invention est de prévoir un circuit de génération de préfixe cyclique qui introduise un retard de transmission particulièrement faible.

Un autre objet de la présente invention est de prévoir un tel circuit qui utilise une mémoire de taille réduite.

Pour atteindre ces objets, la présente invention prévoit un circuit de génération d'un préfixe cyclique d'un symbole composé d'une séquence d'échantillons dans le domaine temporel, ledit préfixe étant la reproduction des derniers échantillons du symbole en tête du symbole, le symbole étant obtenu par transformée de Fourier inverse de coefficients complexes correspondant à des fréquences respectives, comprenant des moyens pour déphaser chaque coefficient complexe d'une valeur proportionnelle à sa fréquence, une mémoire pour stocker les échantillons du début du symbole, et des moyens pour recopier à la fin du symbole les échantillons mémorisés.

Selon un mode de réalisation de la présente invention, les moyens pour déphaser les coefficients complexes comprennent un multiplieur connecté pour multiplier chaque coefficient complexe par une valeur complexe de norme unitaire et de phase proportionnelle à la fréquence associée à chaque coefficient.

Selon un mode de réalisation de la présente invention, la mémoire est de type "premier entré premier sorti".

Selon un mode de réalisation de la présente invention, les moyens pour recopier les échantillons mémorisés comprennent un multiplexeur dont une première entrée et une deuxième entrée sont respectivement connectées à l'entrée et à la sortie de la mémoire.

La présente invention vise en outre un procédé de génération d'un préfixe cyclique d'un symbole dans le domaine temporel, ledit préfixe étant la reproduction des derniers échantillons du symbole en tête du symbole, le symbole étant obtenu par transformée de Fourier inverse de coefficients complexes correspondant à des fréquences respectives, qui comprend les étapes consistant à déphaser chaque coefficient complexe d'une valeur proportionnelle à la fréquence à laquelle il est associé, à stocker les échantillons du début du symbole, et à recopier les échantillons mémorisés à la fin du symbole.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
La figure 1, décrite précédemment, illustre une transformée de Fourier rapide inverse (IFFT) d'un groupe de coefficients complexes ;
la figure 2, décrite précédemment, illustre la génération d'un préfixe cyclique au moyen d'un circuit selon l'art antérieur ;
la figure 3 illustre une transformée IFFT d'un groupe de coefficients complexes selon la présente invention ; et
la figure 4 illustre un mode de réalisation de circuit de génération de préfixe cyclique selon la présente invention.

La présente invention prévoit de décaler de manière circulaire les échantillons d'un symbole auquel on veut ajouter un préfixe cyclique, ceci de manière que les derniers échantillons composant le symbole avant décalage se retrouvent en tête du symbole après décalage, et forment ainsi directement le préfixe. En transmettant le symbole ainsi décalé, on transmet d'abord le préfixe puis une partie du symbole qu'il suffit de compléter par le préfixe pour reconstituer le symbole. Ainsi, on introduit seulement un retard égal au préfixe dans la transmission et il suffit de ne stocker que le préfixe afin de pouvoir le retransmettre pour compléter le symbole.

Le décalage circulaire du symbole doit correspondre à un même décalage circulaire de chacune des sinusoïdes qui composent le symbole. Pour cela, on multiplie chaque coefficient complexe dans le domaine fréquentiel par un facteur complexe provoquant un déphasage dans le domaine temporel, correspondant au décalage circulaire souhaité.

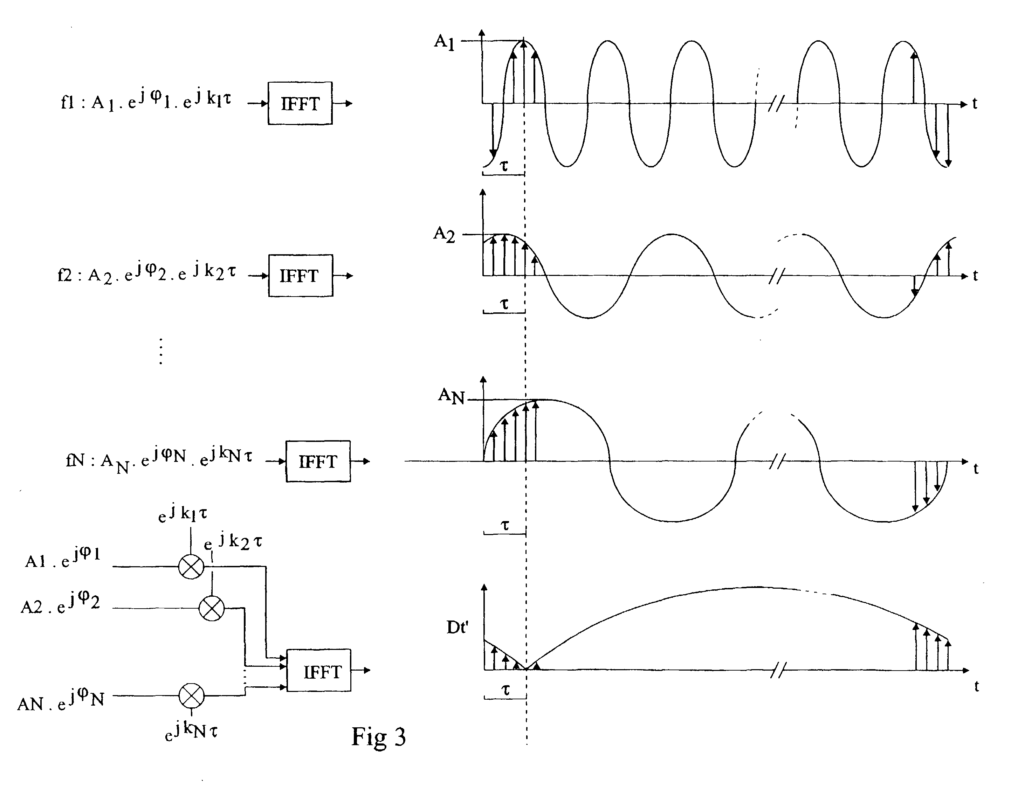

La figure 3 est destinée à illustrer plus en détail cette procédure. Elle illustre la transformée par IFFT d'un groupe de N coefficients complexes A₁.e^{jϕ₁} à A_{N}.e^{jϕ_{N}} multipliés selon la présente invention par des coefficients de décalage e^{jK₁τ} à e^{jK_{N}τ} respectifs. Multiplier un coefficient Aᵢ.e^{jϕᵢ} par un coefficient complexe e^{jΔϕ} revient à modifier la phase ϕᵢ d'une valeur Δϕ. Le déphasage Δϕ provoque un décalage circulaire du tronçon de sinusoïde correspondant d'une valeur Δϕ/2πfᵢ, où fi est la fréquence du tronçon de sinusoïde. Ce décalage n'est donc pas constant, mais une fonction de la fréquence fᵢ.

Selon la présente invention, on déphase les N coefficients complexes A₁.e^{jϕ}_{¹} à A_{N}.e^{jϕ}_{^{N}} pour que les tronçons de sinusoïdes correspondants soient tous décalés circulairement d'une même valeur, ou du même nombre T d'échantillons. Pour cela, chaque coefficient Aᵢ.e^{jϕ}_{ⁱ} est multiplié par un coefficient de la forme e^{jKᵢτ} où Kᵢ est 2πfᵢ. Ainsi, le symbole Dₜ' formé de la somme des tronçons de sinusoïdes correspondant aux coefficients Aᵢ.e^{jϕᵢ}.e^{jKᵢτ}, où i varie de 1 à N, correspond au symbole Dₜ précédent ayant subi un décalage circulaire de τ échantillons.

Les coefficients e^{jKᵢτ} sont prédéterminés, et ils peuvent par exemple être stockés dans une mémoire morte.

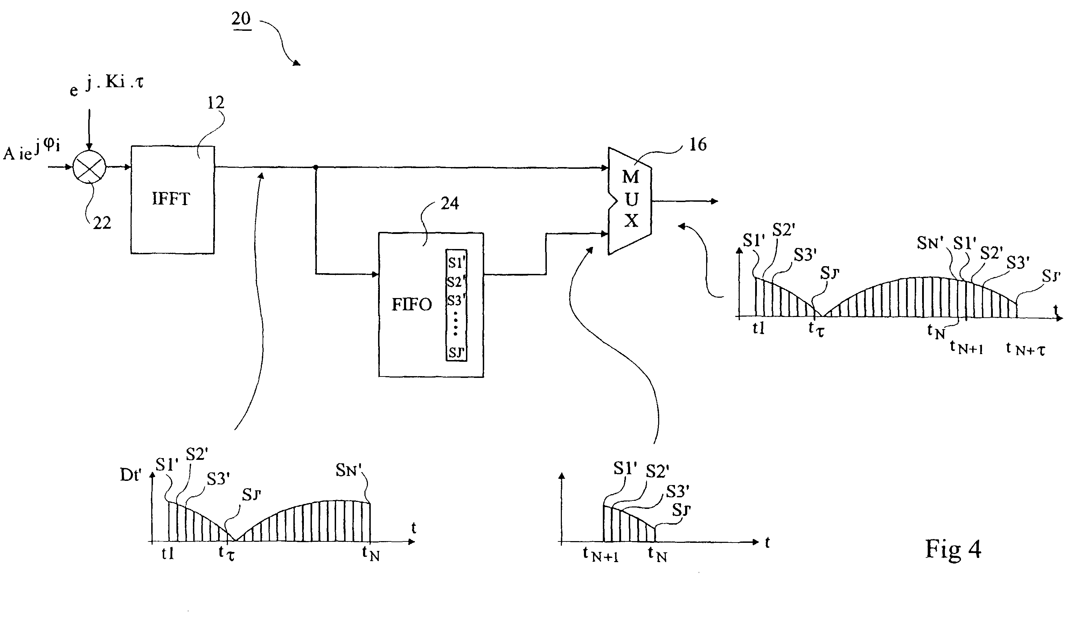

La figure 4 représente un mode de réalisation de circuit 20 de génération d'un préfixe cyclique selon la présente invention. Ce circuit est similaire à celui de la figure 2, et des mêmes références désignent des mêmes éléments. Selon l'invention, les coefficients complexes Aᵢ.e^{jϕᵢ} pour i∈[1, N] sont fournis au circuit IFFT 12 par l'intermédiaire d'un multiplieur complexe 22 dont une deuxième entrée reçoit en correspondance les N coefficients e^{jKᵢτ} susmentionnés.

Comme on l'a vu en relation avec la figure 3, le symbole Dₜ' fourni par le circuit IFFT de la figure 4 correspond au symbole Dₜ de la figure 2 ayant subi un décalage circulaire de τ échantillons. Ainsi, les échantillons S₁' à S_{J}' des τ premiers instants du symbole Dₜ' sont les échantillons S_{I} à S_{N} des τ derniers instants du symbole Dₜ. Les échantillons S₁' à S_{J}' du symbole Dₜ' constituent le préfixe cyclique du symbole Dₜ, et les échantillons suivants du symbole Dₜ' constituent les T-τ premiers échantillons du symbole Dₜ. Pour compléter le symbole Dₜ, il suffit de recopier les échantillons S₁' à S_{J}' à la suite du symbole Dₜ'. Pour cela, les échantillons S₁' à S_{J}' auront été stockés dans la mémoire 24, laquelle mémoire ne doit stocker que τ échantillons au lieu de N-τ.

A un instant t₁, le circuit IFFT 12 fournit le premier échantillon S₁' du symbole Dₜ', et la mémoire 24 est commandée en écriture pour stocker les échantillons produits par le circuit IFFT. Le multiplexeur 16 est commuté pour sélectionner la sortie du circuit IFFT 12. Cette configuration du circuit 10 reste inchangée jusqu'à un instant t_{τ} ; elle permet de stocker les échantillons S₁' à S_{J}' dans la mémoire 24 et de produire en sortie du multiplexeur 16 le préfixe cyclique, formé par les échantillons S₁' à S_{J}'.

A l'instant t_{τ+1}, la mémoire 24, qui vient de stocker les échantillons S₁' à S_{J}', est inactivée. La position du multiplexeur 16 n'est pas modifiée, et cette configuration du circuit 10 est maintenue jusqu'à un instant t_{N}. Le multiplexeur 16 produit dans cet intervalle les échantillons S_{J+1}' à S_{N}' du symbole Dₜ', qui correspondent aux échantillons S₁ à S_{I} décrits précédemment.

A l'instant t_{N+1}, le circuit IFFT 12 est arrêté, la mémoire 24 est commandée en lecture pour produire le premier échantillon S₁' qu'elle contient, et le multiplexeur 16 est commuté pour sélectionner la sortie de la mémoire 24. Cette configuration du circuit 10 reste inchangée jusqu'à un instant t_{N+τ}. Dans cet intervalle, le multiplexeur 16 produit successivement les échantillons S₁' à S_{J}' lus dans la mémoire 24, qui correspondent aux échantillons susmentionnés S_{I+1} à S_{N}.

A l'instant t_{N+τ+1}, le circuit IFFT 12 est réactivé pour fournir les échantillons du symbole suivant et le cycle qui vient d'être décrit recommence comme à l'instant t₁.

La présente invention permet de générer le préfixe cyclique d'un symbole en ne retardant le symbole que de la durée τ du préfixe. Cela représente un gain de temps de t_{N-τ} par rapport à l'art antérieur, ce qui s'avère particulièrement intéressant dans le cas de transmissions en temps réel.

D'autre part, la mémoire 24 utilisée selon la présente invention est de taille réduite, car elle ne sert à mémoriser que les échantillons composant le préfixe.

## Revendications

1. Circuit de génération d'un préfixe cyclique d'un symbole composé d'une séquence d'échantillons dans le domaine temporel, ledit préfixe étant la reproduction des derniers échantillons du symbole en tête du symbole, le symbole étant obtenu par transformée de Fourier inverse de coefficients complexes correspondant à des fréquences respectives, **caractérisé en ce qu'**il comprend :
des moyens (22) pour déphaser chaque coefficient complexe d'une valeur proportionnelle à sa fréquence de manière que lesdits derniers échantillons du symbole soient décalés en tête du symbole selon une permutation circulaire,
une mémoire (24) pour mémoriser lesdits échantillons décalés, et
des moyens (16) pour recopier à la fin du symbole les échantillons mémorisés.

2. Circuit de génération d'un préfixe cyclique selon la revendication 1, **caractérisé en ce que** les moyens pour déphaser les coefficients complexes comprennent un multiplieur (22) connecté pour multiplier chaque coefficient complexe par une valeur complexe de norme unitaire et de phase proportionnelle à la fréquence associée à chaque coefficient.

3. Circuit de génération d'un préfixe cyclique selon la revendication 1, **caractérisé en ce que** la mémoire (24) est de type "premier entré premier sorti" (FIFO).

4. Circuit de génération d'un préfixe cyclique selon la revendication 1, **caractérisé en ce que** les moyens pour recopier les échantillons mémorisés comprennent un multiplexeur (16) dont une première entrée et une deuxième entrée sont respectivement connectées à l'entrée et à la sortie de la mémoire.

5. Procédé de génération d'un préfixe cyclique d'un symbole dans le domaine temporel, ledit préfixe étant la reproduction des derniers échantillons du symbole en tête du symbole, le symbole étant obtenu par transformée de Fourier inverse de coefficients complexes correspondant à des fréquences respectives, **caractérisé en ce qu'**il comprend les étapes consistant à :
déphaser chaque coefficient complexe d'une valeur proportionnelle à la fréquence à laquelle il est associé de manière que lesdits derniers échantillons du symbole soient décalés en tête du symbole selon une permutation circulaire, mémoriser lesdits échantillons décalés, et
recopier les échantillons mémorisés à la fin du symbole.

## Claims

1. A circuit for generating a cyclic prefix of a symbol comprised of a sequence of samples in the time domain, said prefix being the reproduction of the last samples of the symbol at the beginning of the symbol, the symbol being obtained by inverse Fourier transform of complex coefficients corresponding to respective frequencies, **characterized in that** it includes:
means (22) for shifting the phase of each complex coefficient by a value proportional to its frequency, so that said last samples of the symbol are shifted at the beginning of the symbol according to a circular permutation,
a memory (24) for storing the shifted samples, and
means (16) for copying at the end of the symbol the stored samples.

2. The cyclic prefix generation circuit of claim 1, **characterized in that** the means for shifting the phase of the complex coefficients include a multiplier (22) connected to multiply each complex coefficient by a complex value having a unity norm and a phase proportional to the frequency associated with each coefficient.

3. The cyclic prefix generation circuit of claim 1, **characterized in that** the memory (24) is of FIFO type.

4. The cyclic prefix generation circuit of claim 1, **characterized in that** the means for copying the stored samples include a multiplexer (16), a first input and a second input of which are respectively connected to the input and to the output of the memory.

5. A method for generating a cyclic prefix of a symbol in the time domain, said prefix being the reproduction of the last samples of the symbol at the beginning of the symbol, the symbol being obtained by inverse Fourier transform of complex coefficients corresponding to respective frequencies, **characterized in that** it includes the steps of:
shifting the phase of each complex coefficient by a value proportional to the frequency with which it is associated, so that said last samples of the symbol are shifted at the beginning of the symbol according to a circular permutation,
storing said shifted samples, and
copying the stored samples at the end of the symbol.

## Patentansprüche

1. Schaltkreis zum Erzeugen eines zyklischen Präfix eines Symbols, das aus einer Folge von Abtastwerten im Zeitbereich zusammen gesetzt ist, wobei das Präfix die Wiedergabe der letzten Abtastwerte des Symbols am Anfang des Symbols ist, und wobei das Symbol durch die inverse Fourier-Transformierte komplexer Koeffizienten, die entsprechenden Frequenzen entsprechen, erhalten wird, **gekennzeichnet durch**:
- Mittel (22) zum Verschieben der Phase jedes komplexen Koeffizienten um einen Wert, der proportional zu seiner Frequenz ist, so daß die letzten Abtastwerte des Symbols gemäß einer Kreispermutation zum Anfang des Symbols verschoben werden,
- ein Speicher (24) zum Speichern der verschobenen Abtastwerte und
- Mittel (16) zum Kopieren der gespeicherten Abtastwerte an das Ende des Symbols.

2. Schaltkreis zum Erzeugen eines zyklischen Präfix nach Anspruch 1, **dadurch gekennzeichnet, daß** die Mittel zum Verschieben der Phase der komplexen Koeffizienten einen Multiplizierer (22) umfassen, der so angeschlossen ist, daß er jeden komplexen Koeffizient mit einem komplexen Wert multipliziert, der eine Einheitsgröße und eine Phase aufweist, die proportional zu der zu jedem Koeffizienten gehörenden Frequenz ist.

3. Schaltkreis zum Erzeugen eines zyklischen Präfix nach Anspruch 1, **dadurch gekennzeichnet, daß** der Speicher (24) ein FIFO-Speicher ist.

4. Schaltkreis zum Erzeugen eines zyklischen Präfix nach Anspruch 1, **dadurch gekennzeichnet, daß** die Mittel zum Kopieren der gespeicherten Abtastwerte einen Multiplexer (16) aufweisen, wobei ein erster Eingang und ein zweiter Eingang des Multiplexers jeweils mit den Eingang bzw. dem Ausgang des Speichers verbunden sind.

5. Verfahren zum Erzeugen eines zyklischen Präfix eines Symbols im Zeitbereichs, wobei das Präfix die Wiedergabe der letzten Abtastwerte des Symbols am Anfang des Symbols ist, und wobei das Symbol durch inverse Fourier-Transformation komplexer Koeffizienten, die jeweils Frequenzen entsprechen, erhalten wird, **gekennzeichnet, durch** die folgenden Verfahrensschritte:
- Verschieben der Phase jedes komplexen Koeffizienten um einen Wert, der proportional zu der Frequenz ist, zu welcher er gehört, so daß die letzten Abtastwerte des Symbols zum Anfang des Symbols gemäß einer Kreispermutation verschoben werden,
- Speichern der verschobenen Abtastwerte,
- Kopieren der gespeicherten Abtastwerte an das Ende des Symbols.
